# EUROPEAN PATENT APPLICATION

(11) **EP 4 657 564 A1**
(43) Date of publication of application: **03.12.2025**
(21) Application number: 25165496.8
(22) Date of filing: 23.03.2025
(51) Int. Cl.: H01M 4/38, H01M 10/36, H01M 12/08, H01M 4/583, H01M 4/62, H01M 4/86, H01M 4/88, H01M 4/96

(54) **ENHANCED CATHODE ELECTRODE OF ZINC BROMINE STATIC BATTERY APPARATUS AND METHOD OF PREPARATION THEREOF**

(30) Priority: 27.05.2024 IN 202411041062
(71) Applicant: Offgrid Energy Labs Inc., San Francisco California 94111 (US)
(72) Inventor: TULACHAN, Brindan, Kanpur-208016, Uttar Pradesh (IN); SUBRAMANIAN, Suresh, Virudhunagar District, Tamil Nadu 626132 (IN)
(74) Representative: Nirwan, Prajwal

(57) **Abstract**

A cathode electrode of a Zinc Bromine Static Battery (ZBSB) apparatus. The cathode electrode comprises 80-90 % by weight of a mixture of a quaternary ammonium salt fused with activated carbon to form a salt-fused activated carbon component. The cathode electrode further comprises 5-12 % by weight of super P carbon. Furthermore, the cathode electrode comprises 1-5 % by weight of a binder. The salt-fused activated carbon component, super P carbon, and the binder are mixed together to form the cathode electrode.

## Description

### CROSS-REFERENCE TO RELATED APPLICATIONS/INCORPORATION BY REFERENCE

This Application makes reference to, claims priority to, and claims benefit from Indian Non-Provisional Application No. 202411041062 filed on May 27, 2024.

### TECHNICAL FIELD

The present disclosure relates generally to battery technology and more specifically, to a Zinc Bromine Static Battery (ZBSB) apparatus, a cathode electrode of the ZBSB apparatus and a method of preparation of the cathode electrode of the ZBSB apparatus.

### BACKGROUND

Among various battery technologies, zinc bromine static batteries (ZBSBs) have emerged as promising candidates for different range of energy storage due to their high energy density and long cycle life. However, a significant challenge faced by conventional ZBSBs designs is the diffusion of element bromine from the cathode electrode into the electrolyte solution during the charging process.

During a charging cycle of the ZBSB, the element bromine is liberated at a surface of the cathode electrode. When the element bromine diffuses into an electrolyte solution, performance and longevity of the ZBSB can be affected detrimentally. The diffused element bromine may initiate unwanted side reactions, leading to decreased battery efficiency and increased overall cell voltage. Moreover, the crossover of element bromine may contribute to corrosion, compromising the overall stability and cycle life of the ZBSB. The crossover refers specifically to the movement of the element bromine from the cathode side to the anode side through the electrolyte. The migration of element bromine, particularly during the charging process, can have significant implications for the battery's performance, including increasing the over-cell voltage and decreasing overall efficiency. The element bromine may trigger chemical reactions on the anode side, causing voltage spikes beyond desired levels. Further, element bromine crossover may disrupt electrochemical processes inside the ZBSB apparatus, reducing energy conversion efficiency and overall battery performance. Additionally, bromine contamination of the electrolyte may interfere with stable reactions, further decreasing efficiency and compromising long-term reliability. Continuous crossover also leads to capacity loss over time, diminishing the battery's ability to store and deliver energy effectively. Certain efforts have been made to address challenge of the element bromine diffusion, such as modifying cathode electrode materials, optimizing the electrolyte compositions, or implementing barrier layers. But the efforts have provided limited success and have not offered a comprehensive solution.

Therefore, in the light of the foregoing discussion, there exists a need to overcome the aforementioned drawbacks.

### SUMMARY

The present disclosure provides a cathode electrode of (for use in) a Zinc Bromine Static Battery (ZBSB) apparatus and a method of preparation of the cathode electrode of (for use in) the ZBSB apparatus. The present disclosure provides a solution to the technical problem of how to enhance the corrosion resistance and overall performance of the cathode electrode of the ZBSB apparatus, particularly addressing issues related to diffusion of element bromine liberated at the surface of the cathode electrode. An aim of the present disclosure is to provide a solution that overcomes at least partially the problems encountered in the prior art and provide the cathode electrode of the ZBSB apparatus that effectively mitigates corrosion during charge and discharge cycles, seizes the diffusion of the element bromine to the electrolyte, and enhances the overall efficiency and longevity of the ZBSB apparatus. Further, the aim of the present disclosure is to provide an improved ZBSB apparatus with enhanced performance, and a method of preparation of the cathode electrode of the ZBSB apparatus which uses a dry electrode process. The method aims to achieve superior adhesion and conductivity, addressing the shortcomings of conventional cathode electrode preparation methods and contributing to the enhanced performance of the ZBSB apparatus.

One or more objectives of the present disclosure are achieved by the solutions provided in the enclosed independent claims. Advantageous implementations of the present disclosure are further defined in the dependent claims.

In one aspect, the present disclosure provides the cathode electrode of the ZBSB apparatus. The cathode electrode includes 80-90 % by weight of a mixture of a quaternary ammonium salt fused with activated carbon to form a salt-fused activated carbon component. The cathode electrode further includes 5-12 % by weight of super P carbon (SPC). Furthermore, the cathode electrode includes 1-5 % by weight of a binder. The salt-fused activated carbon component, SPC, and the binder are mixed together to form the cathode electrode.

The quaternary ammonium salts are compounds with positively charged nitrogen atoms bonded to four organic groups and a halide ion. When fused with activated carbon, the quaternary ammonium salts form the salt-fused activated carbon component. The salt-fused activated carbon component acts as an impediment to the diffusion of element bromine due to its unique chemical properties. The activated carbon has a high surface area and porous structure, providing ample surface area for the quaternary ammonium salt to interact with the element bromine. The positively charged nitrogen atoms of the quaternary ammonium salt may attract and form complexes with the element bromine molecules, effectively trapping them within the porous structure of the activated carbon. The immobilization prevents the diffusion of the element bromine into an electrolyte solution. The quaternary ammonium salt further improves the adsorption capability of the activated carbon by modifying its surface properties and introducing additional binding sites for the element bromine. As salt-fused activated carbon component minimizes the diffusion of the element bromine into the electrolyte, occurrence of unwanted side reactions between the element bromine and other components of the electrolyte or the cathode electrode materials are reduced. The quaternary ammonium salts are compatible with electrolyte solutions commonly used in the ZBSB apparatus. The compatibility ensures that the salt-fused activated carbon component does not adversely interact with or degrade the electrolyte. The activated carbon provides a high surface area and porous structure, which may contribute to increased electrochemical reaction sites and improved charge transfer kinetics, potentially enhancing the overall performance of the cathode electrode. The presence of quaternary ammonium cations in the salt-fused activated carbon facilitates ion transport and improve the ionic conductivity within the cathode electrode, leading to more efficient electrochemical reactions. Further, the inclusion of SPC, which is a highly conductive form of carbon, may enhance the electrical conductivity of the cathode electrode, facilitating efficient electron transfer during the electrochemical reactions. Additionally, the fusion of the quaternary ammonium salt with activated carbon enhances the stability and durability of the cathode electrode. The chemical bonding mechanism helps prevent the leaching or dissolution of the quaternary ammonium salt during an operation of the ZBSB apparatus, ensuring long-term stability and mitigating performance degradation over extended cycling. Moreover, the binder facilitates providing mechanical stability and structural integrity to the cathode electrode, ensuring proper adhesion and preventing degradation during the operation of ZBSB apparatus.

The disclosed cathode electrode achieves an unexpected synergistic effect through the precise combination of components within their specified weight ratios. Particularly, the quaternary ammonium salt-fused activated carbon component (80-90% by weight) interacts with the super P carbon (5-12% by weight) in a manner that creates a unique microporous-mesoporous dual structure. This is evidenced by the sharp performance drop observed at the compositional boundaries as shown in Table 5, where the energy efficiency drops from 82.78% at 80% salt-fused activated carbon content to 76.92% at just 78% content and similarly decreases from 87.23% at 90% content to 84.69% at 92% content. As demonstrated in Table 10, bromine diffusion increases dramatically from 4.48 µmol/mL at 5% super P carbon to 7.36 µmol/mL at just 4% super P carbon. This is not merely an optimization of known components, but rather a significant technical effect where the quaternary ammonium molecules become properly anchored within the carbon matrix, creating selectively permeable pathways that allow ion transport while effectively immobilizing the elemental bromine. The dramatic reduction in bromine diffusion compared to conventional electrodes (as shown in Tables 9-11), coupled with the unexpected increase in cycling stability demonstrated in Table 12 (89.2% capacity retention after 100 cycles with the optimal 90% salt-fused activated carbon, 7% super P carbon, and 3% binder versus 42.7% capacity retention when the binder content is reduced to 0.5%) demonstrates a transformative improvement. This represents a fundamental advancement in ZBSB technology rather than incremental optimization, as further evidenced by the data in Table 8 showing consistently good to excellent performance.

In accordance with an embodiment, the cathode electrode comprises 85-90 % by weight of the salt-fused activated carbon component, 7-12 % by weight of the super P carbon, and 3 % by weight of the binder. Advantageously, mixture of 85-90% by weight of polyvinylidene fluoride (PVDF), 7-12 % by weight of the SPC is more effective providing immobility when combined with 3% by weight of the binder.

In accordance with an embodiment, the salt-fused activated carbon component comprises 30-70 % by weight of the quaternary ammonium salt and 40-70 % of weight of the activated carbon. Beneficially, by varying the weight percentages of the quaternary ammonium salt and the activated carbon within the salt-fused activated carbon component, the properties of the salt-fused activated carbon component may be tailored to specific requirements. The flexibility allows for the optimization of key characteristics such as porosity, surface area, and ion exchange capacity, which are important for achieving improved battery performance metrics of the ZBSB apparatus. Further, the presence of the quaternary ammonium salt within the activated carbon matrix promotes improved electrochemical activity by providing additional active sites for redox reactions. The additional active site for redox reactions enhances the charge storage capacity and ion diffusion kinetics of the cathode electrode, leading to higher energy density and better overall performance of the ZBSB apparatus.

In accordance with an embodiment, the quaternary ammonium salt comprises tetraethylammonium bromide, tetrapropylammonium bromide, tetrabutylammonium bromide, tetraethylammonium chloride, tetrapropylammonium chloride, and tetrabutylammonium chloride. The availability of multiple quaternary ammonium salts provides flexibility in tailoring the composition of the cathode electrode to meet specific performance requirements and application needs. Each quaternary ammonium salt may impart unique characteristics to the cathode electrode, allowing for fine-tuning of properties such as ion conductivity, charge storage capacity, and stability. Different quaternary ammonium salts exhibit varied electrochemical behaviours, enabling the optimization of the cathode electrode performance for specific battery chemistries and operating conditions. The versatility allows for the selection of salts that facilitate efficient charge transfer, ion diffusion, and redox reactions within the cathode electrode, ultimately improving battery efficiency of the ZBSB apparatus.

In accordance with an embodiment, the binder comprises polytetrafluoroethylene (PTFE) or polyvinylidene fluoride (PVDF). The purpose of adding the binder is to enhance the cohesion and adhesion of the activated carbon particles in the cathode electrode. The binder acts as a binding agent, ensuring the structural integrity of the cathode electrode and preventing the carbon particles from separating or dislodging during the operation of the ZBSB apparatus. The inclusion of the PTFE or the PVDF as the binders in the cathode electrode leads to improved electrode performance. The PTFE and the PVDF have excellent chemical resistance, high thermal stability, and strong adhesion properties. Each of the PTFE and PVDF facilitates in maintaining the structural integrity of the electrode, enhancing its mechanical strength, and providing better electrical conductivity.

In second aspect, the present disclosure provides a ZBSB apparatus. The ZBSB apparatus includes a first cell that comprises a first cathode electrode. The first cathode electrode is in contact with a first cathode current collector. Further, the ZBSB apparatus comprises a second cell that comprises a second cathode electrode. The second cathode electrode is in contact with a second cathode current collector. Furthermore, each of the first cathode electrode and the second cathode electrode includes 80-90 % by weight of a mixture of a quaternary ammonium salt fused with activated carbon to form a salt-fused activated carbon component, 5-12 % by weight of super P carbon, and 1-5 % by weight of a binder. The salt-fused activated carbon component, the super P carbon (SPC), and the binder are mixed together to form the cathode electrode.

In third aspect, the present disclosure provides a method of preparing a cathode electrode of a Zinc Bromine Static Battery apparatus. The method includes drying activated carbon and a quaternary ammonium salt to remove moisture. Further, the method includes preparing an aqueous solution by dispersing 30-70 % by weight of the quaternary ammonium salt and 40-70 % by weight of the activated carbon in water. The method further includes heating the aqueous solution to obtain a salt-fused activated carbon powder. The method further includes mixing 80-90 % by weight of the salt-fused activated carbon powder with 5-12 % by weight of super P carbon and 1-5 % of weight of a binder to form a cathode electrode mixture. The method further includes forming the cathode electrode mixture into a sheet to obtain the cathode electrode.

The method achieves all the advantages and technical effects of the cathode electrode of the ZBSB apparatus of the present disclosure.

It has to be noted that all devices, elements, circuitry, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof. It will be appreciated that features of the present disclosure are susceptible to being combined in various combinations without departing from the scope of the present disclosure as defined by the appended claims.

Additional aspects, advantages, features and objects of the present disclosure would be made apparent from the drawings and the detailed description of the illustrative implementations construed in conjunction with the appended claims that follow.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those in the art will understand that the drawings are not to scale. Wherever possible, like elements have been indicated by identical numbers.

Embodiments of the present disclosure will now be described, by way of example only, with reference to the following diagrams wherein:
FIG. 1A is a diagram illustrating an exploded view of a cell of a zinc bromine static battery (ZBSB) apparatus, in accordance with an embodiment of the present disclosure;
FIG. 1B is a diagram illustrating a cross-sectional view of the ZSBS apparatus, in accordance with an embodiment of the present disclosure;
FIG. 1C is a diagram illustrating a top view of the ZBSB apparatus, in accordance with an embodiment of the present disclosure;
FIG. 2 is a diagram illustrating cross sectional view of a cell of another ZBSB apparatus, in accordance with another embodiment of the present disclosure;
FIG. 3 is a diagram illustrating cross sectional view of a cell of yet another ZBSB apparatus, in accordance with another embodiment of the present disclosure;
FIG. 4 is a diagram illustrating a graphical representation of GCD profiles of various ZBSB apparatus, in accordance with an embodiment of the present disclosure;
FIG. 5 is a flowchart of a method of preparation of the cathode electrode, in accordance with an embodiment of the present disclosure; and
FIG. 6 is a diagram illustrating a graphical representation of a GCD profile depicting the comparison between a wet electrode process and a dry electrode process, in accordance with an embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

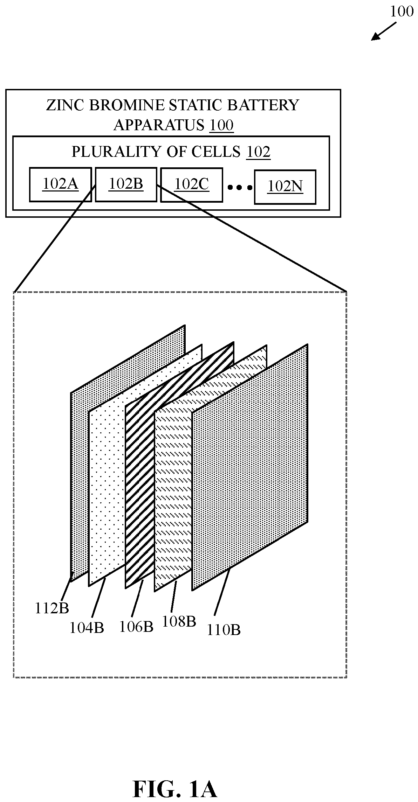

FIG. 1A is a diagram illustrating an exploded view of a cell of a zinc bromine static battery (ZBSB) apparatus, in accordance with an embodiment of the present disclosure. With reference to FIG. 1A, there is shown a ZBSB apparatus **100.** The ZBSB apparatus **100** includes a plurality of cells **102.** The plurality of cells **102** includes a first cell **102A,** a second **cell 102B,** a third cell **102C,** and so on up to an Nth cell **102N.** In the illustrated embodiment of FIG. 1A, the second cell **102B** includes a second anode electrode **104B,** a second cathode electrode **108B,** and a second separator **106B** disposed between the second anode electrode **104B and** the second cathode electrode **108B.** Further, the second anode electrode **104B** is in contact with a second anode current collector **112B** and a second cathode electrode **108B** is in contact with the second cathode current collector **110B.**

It should be noted that, for illustration purposes, only the second **cell 102B** is explicitly shown in FIG. 1A. However, each cell in the ZBSB apparatus **100** is structurally similar, sharing common features and functionalities. The omitted cells (e.g., **102A, 102C** to **102N)** adhere to the same design principles and components, differing only in their sequential arrangement within the battery stack. Components for cells **102A, 102C,** to **102N** are not explicitly shown in FIG. 1A for clarity but follow the same numbering convention.

The ZBSB apparatus **100** refers to a type of rechargeable battery that uses zinc and bromine as its active materials in which the static property comes from the fact that the ZBSB apparatus **100** may not require any pumps or moving parts to circulate an electrolyte, unlike a flow battery. Further, the ZBSB apparatus **100** involves a redox reaction between zinc and bromine ions. During discharge, zinc is oxidized at the anode, releasing electrons, while bromine is reduced at the cathode, accepting electrons. During charging, this process is reversed.

The plurality of cells **102** in the ZBSB apparatus **100** refers to the multiple individual electrochemical cells that are connected together to form the overall battery. The plurality of cells **102** are arranged in a stack within the ZBSB apparatus **100.**

Each cell of the plurality of cells **102** (for example, the first cell **102A,** the second cell **102,** and so on up to the Nth cell **102N)** refers to an individual electrochemical unit within the ZBSB apparatus **100** where the conversion of chemical energy to electrical energy takes place (i.e. through redox reactions). Each cell consists of an anode electrode (for example, the second anode electrode **104B)** and a cathode electrode (for example, the second cathode electrode **108B)** immersed in an electrolyte solution containing zinc and bromine compounds. Further, each cell includes a separator (for example, the second separator **106B)** between the anode electrode and the cathode electrode. Furthermore, each cell includes an anode current collector and a cathode current collector (for example, the second anode current collector **112B** and the second cathode current collector **110B).**

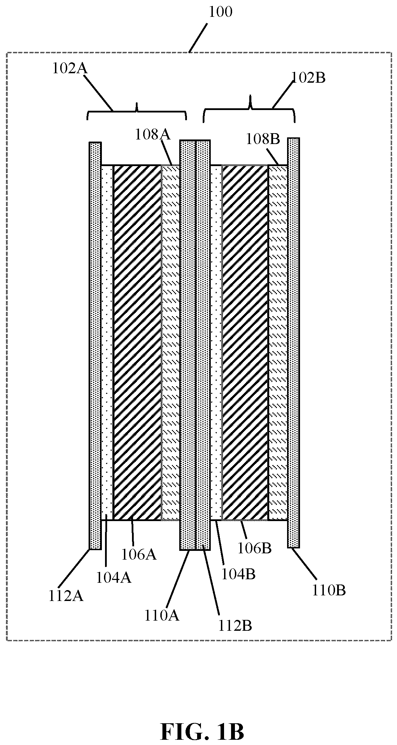

FIG. 1B is a diagram illustrating a cross-sectional view of the ZBSB apparatus, in accordance with an embodiment of the present disclosure. FIG. 1B is explained in conjunction with elements from FIG. 1A. With reference to FIG. 1B, there is shown the ZBSB apparatus **100** which includes the first cell **102A** and the second cell **102B** of the plurality of cells **102** for illustration purposes. The first cell **102A** includes a first anode electrode **104A,** a first cathode electrode **108A** and a first separator **106A** disposed between the first anode electrode **104A** and the first cathode electrode **108A.** The first **cell 102A** further includes a first cathode current collector **110A** and a first anode current collector **112A.** The first anode electrode **104A** is in contact with the first anode current collector **112A** and the first cathode electrode **108A** is in contact with the first cathode current collector **110A.** As discussed above, the second **cell 102B** includes the second anode electrode **104B,** the second separator **106B,** and the second cathode electrode **108B.**

The anode electrode (for example, the first anode electrode **104A** and the second anode electrode **104B)** in the ZBSB apparatus **100** refers to an electrode where oxidation takes place during the discharge phase of an electrochemical cell. Specifically, in the case of the ZBSB apparatus **100,** zinc (Zn) is used as an anode material, the anode electrode is the region or component where metallic zinc undergo oxidation. In case of the first anode electrode **104A,** during a charging process, zinc ions in the electrolyte flows to the first anode electrode **104A** and are deposited at the first anode electrode **104A** in a solid state (i.e., Zn is plated at the first anode electrode **104A).** Further, two electrons are released from the first cathode electrode **108A,** travel through the external circuit, and are accepted by the zinc ions at the first anode electrode **104A.** The acceptance of the electrons by the zinc ions at the first anode electrode **104A** is known as a zinc plating process. During a discharging process, zinc plated at the first anode electrode **104A** releases two electrons that forms zinc ions. The zinc ions are then dissolves in the electrolyte. Simultaneously, the released electrons are accepted by element bromine of the first cathode electrode **108A** to form mobile bromide ions which in turn also dissolves in the electrolyte. In case of the second anode electrode **104B,** during the charging process, the Zn ions in the electrolyte flows to the second anode electrode **104B** and are deposited at the second anode electrode **104B** in a solid state (i.e., the metallic zinc is plated at the second anode electrode **104B).** Yet again, during the Zn plating process, two electrons released from the second cathode electrode **108B** travel through the external circuit and are accepted by the zinc ions at the second anode electrode **104B.** During the discharging process, the zinc plated at the second anode electrode **104B** releases two electrons that forms the zinc ions. The zinc ions then dissolves in the electrolyte. Further, the released electrons are accepted by the element bromine of the second cathode electrode **108B** to form the mobile bromide ions which in turn also dissolves in the electrolyte.

The cathode electrode (for example, the first cathode electrode **108A** and the second cathode electrode **108B)** refers to the electrode where reduction reactions occur during the discharge phase of the electrochemical cell. Specifically, in the case of the ZBSB apparatus **100,** the cathode electrode is a component where bromine molecules are reduced. In case of the first cathode electrode **108A,** during the charging process, the bromide ions from the electrolyte are oxidized and forms the element bromine that is generated on the first cathode electrode **108A.** During formation of the element bromine in the charging process, two electrons are released at the first cathode electrode **108A,** where the two electrons travel through the external circuit and accepted by the zinc ions at the first anode electrode **104A,** and where the zinc ions after accepting the two electrons gets plated at the first anode electrode **104A** of the first cell **102A.** During the discharge process, the element bromine generated on the first cathode electrode **108A** accepts two electrons (received from the first anode electrode **104A** via the external circuit) and the element bromine is reduced that forms the bromide ions. The bromide ions are then dissolved in the electrolyte. In the case of the second cathode electrode **108B,** during the charging process, the bromide ions from the electrolyte are oxidized and forms the element bromine that is generated on the second cathode electrode **108B.** During formation of the bromide ion in the charging process, the two electrons are released at the second cathode electrode **108B,** where the two electrons travel through the external circuit and accepted by the zinc ions at the second anode electrode **104B,** and where the zinc ions after accepting the two electrons gets plated at the second anode electrode **104B** of the first cell **102A.** During the discharge process, the element bromine generated on the first cathode electrode **108A** accepts two electrons (received from the first anode electrode **104A** via the external circuit) and the element bromine is reduced forming bromide ions. The bromide ions are then dissolved in the electrolyte.

In an implementation, the cathode electrode (for example, the first cathode electrode **108A** and the second cathode electrode **108B)** of the ZBSB apparatus **100** includes 80-90 % by weight of a mixture of a quaternary ammonium salt fused with activated carbon to form a salt-fused activated carbon component. The "quaternary ammonium salt" refers to a type of an organic compound that contains a positively charged nitrogen atom and four organic groups attached to it. The "activated carbon" refers to a form of carbon that has been processed to have a large surface area and high porosity, making it highly adsorbent. The term "salt-fused activated carbon component" refers to a composite material formed through a specific aqueous solution process wherein quaternary ammonium salt molecules are integrated with activated carbon, resulting in both physical adsorption onto the carbon surface and partial intercalation within the carbon pore structure. The 'fusion' specifically denotes the intimate association between the quaternary ammonium salt and activated carbon achieved through the heating process, where the salt molecules form strong interactions with the functional groups present on the activated carbon surface. The fusion creates a composite material with different properties than a simple physical mixture of the components. The salt-fused activated carbon exhibits enhanced conductivity and improved bromine adsorption capabilities compared to pristine activated carbon, as the quaternary ammonium cations create additional binding sites for bromine molecules while also enhancing ion transport pathways through the electrode material. The unique material structure enables the dual functionality of efficient electron conduction and selective element bromine trapping, improving performance of the cathode electrode. The quaternary ammonium salts are compatible with electrolyte solutions commonly used in the ZBSBs apparatus **100.** The compatibility ensures that the salt-fused activated carbon component does not adversely interact with or degrade the electrolyte. The activated carbon provides a high surface area and porous structure, which may contribute to increased electrochemical reaction sites and improved charge transfer kinetics, potentially enhancing the overall performance of the cathode electrode. The presence of quaternary ammonium cations in the salt-fused activated carbon facilitates ion transport and improve the ionic conductivity within the cathode electrode, leading to more efficient electrochemical reactions.

In some examples, the quaternary ammonium salt comprises tetraethylammonium bromide (TEAB), tetrapropylammonium bromide (TPAB), tetrabutylammonium bromide (TBAB), tetraethylammonium chloride (TEAC), tetrapropylammonium chloride (TPAC), and tetrabutylammonium chloride (TBAC). The range of multiple quaternary ammonium salts provides flexibility in tailoring the composition of the cathode electrode to meet specific performance requirements and application needs. Each quaternary ammonium salt may impart unique characteristics to the cathode electrode, allowing for fine-tuning of properties such as ion conductivity, charge storage capacity, and stability. Different quaternary ammonium salts exhibit varied electrochemical behaviours, enabling the optimization of the cathode electrode performance for specific battery chemistries and operating conditions. The versatility allows for the selection of the quaternary ammonium salts that facilitate efficient charge transfer, ion diffusion, and redox reactions within the cathode electrode, ultimately improving battery efficiency of the ZBSB apparatus **100.**

The effect on parameters of the ZBSB apparatus **100** due to different quaternary ammonium salts used in the cathode electrode is shown in Table 1 as provided below.

**Table 1**

| Cathode Electrode | Charge Capacity | Discharge Capacity | Coulombic Efficiency (%) | Voltaic Efficiency (%) | Energy Efficiency (%) |
|---|---|---|---|---|---|
| TEAB | 25 | 23.63 | 94.50 | 92.30 | 87.23 |
| TPAB | 25 | 22.99 | 91.08 | 92.11 | 83.90 |
| TBAB | 25 | 23.11 | 92.42 | 91.27 | 84.36 |
| TEAC | 25 | 23.43 | 93.71 | 92.30 | 86.50 |
| TPAC | 25 | 21.84 | 87.35 | 90.65 | 79.19 |
| TBAC | 25 | 22.76 | 91.04 | 89.34 | 81.34 |

As enumerated in Table. 1, the specified quaternary ammonium salts exhibit decent amount of energy efficiency which is required for proper functioning of the ZBSB apparatus **100.** Further, among the group of the quaternary ammonium salts, the TEAB appears to exhibit better discharge capacity, coulombic efficiency (%), voltaic efficiency (%), and energy efficiency (%) as compared to other specified quaternary salts.

In an implementation, the cathode electrode (for example, the first cathode electrode **108A** and the second cathode electrode **108B)** further includes 5-12 % by weight of super P carbon (SPC). The SPC refers to a type of carbon material that exhibits high electrical conductivity and is commonly used as an additive in electrode formulations for electrochemical devices, for example, the ZBSB apparatus **100.** The addition of the SPC in the cathode electrode is essential to enhance the performance of the ZBSB apparatus **100.** The SPC improves the electrical conductivity and stability of the cathode electrode, leading to improved battery efficiency and longevity.

In an implementation, the cathode electrode (for example, the first cathode electrode **108A** and the second cathode electrode **108B)** further includes 1-5 % by weight of a binder. The salt-fused activated carbon component, the SPC, and the binder are mixed together to form the cathode electrode. The binder refers to a substance that is used to hold together the active materials and other components in the ZBSB apparatus **100** providing cohesion and structural integrity to the cathode electrode. The purpose of adding the binder is to enhance the cohesion and adhesion of the activated carbon particles in the cathode electrode. The binder acts as a binding agent, ensuring the structural integrity of the cathode electrode and preventing the carbon particles from separating or dislodging during the operation of the ZBSB apparatus **100.** In some examples, the binder comprises polytetrafluoroethylene (PTFE) or polyvinylidene fluoride (PVDF). The PTFE and the PVDF exhibits excellent chemical resistance, high thermal stability, and strong adhesion properties. When the PTFE or the PVDF as implemented as binders in the cathode electrode, the performance of the ZBSB apparatus **100** improves significantly. The PTFE and PVDF facilitates in maintaining the structural integrity of the cathode electrode, enhancing its mechanical strength, and providing better electrical conductivity.

In some implementations, the cathode electrode comprises 85-90 % by weight of the salt-fused activated carbon component, 7-12 % by weight of the SPC, and 3 % by weight of the binder. By having 85-90% of the salt-fused activated carbon component, the cathode electrode has an extremely high concentration of the material responsible for minimizing the element bromine diffusion into the electrolyte. This facilitates in maximizing the effectiveness of the quaternary ammonium salt in trapping bromine at the cathode surface, leading to reduced self-discharge and crossover. The SPC provides sufficient electronic conductivity to the cathode electrode while leaving enough composition room for the salt-fused activated carbon component. The balance ensures good charge transport within the cathode electrode without compromising the bromine adsorption capability. The specific binder composition ensures that the binder provide sufficient mechanical integrity and binding of the cathode electrode without excessive binder that could hinder ion/electron transport.

In an implementation, the salt-fused activated carbon component comprises 30-70 % by weight of the quaternary ammonium salt and 40-70 % of weight of the activated carbon. Beneficially, by varying the weight percentages of the quaternary ammonium salt and the activated carbon within the salt-fused activated carbon component, the properties of the salt-fused activated carbon component may be tailored to specific requirements. The flexibility allows for the optimization of key characteristics such as porosity, surface area, and ion exchange capacity, which are important for achieving improved battery performance metrics of the ZBSB apparatus **100.** Further, the presence of the quaternary ammonium salt within the activated carbon matrix promotes improved electrochemical activity by providing additional active sites for redox reactions. The additional active site for redox reactions enhances the charge storage capacity and ion diffusion kinetics of the cathode electrode, leading to higher energy density and better overall performance of the ZBSB apparatus **100.**

The separator (for example, the first separator **106A** and the second separator **106B)** refers to a component that physically and electrically separates the anode electrode and the cathode electrode within a cell. The primary purpose of the separator is to prevent direct contact between the positive and negative electrodes while allowing the flow of ions between them. In an example, the first separator **106A** separates the first anode electrode **104A** and the first cathode electrode **108A.** The first separator **106A** have submicron-sized pores and the pores work as channels where ions move between the first anode electrode **104A** and the first cathode electrode **108A.** Examples of the implementation of the first separator **106A** may include, but are not limited to, an absorption glass Mat (AGM), a polyethylene (PE) or a sulfonated tetrafluoroethylene based fluoropolymer-copolymer. In another example, the second separator **106B** separates the second anode electrode **104B** and the second cathode electrode **108B.** The second separator **106B** have submicron-sized pores and the pores work as channels where ions move between the second anode electrode **104B** and the second cathode electrode **108B.** Examples of the implementation of the second separator **106B** may include, but are not limited to an absorption glass metal (AGM), a polyethylene (PE) or a sulfonated tetrafluoroethylene based fluoropolymer-copolymer.

The current collector (for example, the first anode current collector **112A,** the first cathode current collector **110A,** the second anode current collector **112B,** and the second cathode current collector **110B)** refers to a specialized structure used in certain types of batteries, including the ZBSB apparatus 100. The current collector in the ZBSB apparatus 100 acts as a conductive pathway for the flow of electrons between the electrochemical reactions (i.e. redox reactions) occurring in the cathode electrode and the anode electrode of the ZBSB apparatus 100 and an external circuit. The current collector facilitates the transfer of electrical charges generated during the chemical reactions within the ZBSB apparatus **100.**

In some implementations, each of the first cathode electrode **108A** and the second cathode electrode **108B** is in physical contact with the current collector comprising any one of titanium metal, a conductive high-density polyethylene (HDPE) sheet, and a bilayer of graphite conducting polymer and HDPE conducting sheet. The physical contact between the cathode electrode and the current collector stabilizes the cathode electrode during charge and discharge cycles, preventing detachment and ensuring longevity. The physical contact promotes uniform current distribution, preventing high current density areas that may degrade the cathode electrode. Additionally, physical contact minimizes resistance at the cathode electrode-electrolyte interface, facilitating efficient charge transfer. Further, the option to use different materials for the current collector, provides flexibility in designing batteries for specific applications. Each material offers unique properties that can be tailored to meet the requirements of different battery systems.

In some implementations, the ZBSB apparatus **100** includes cathode current collector as HDPE sheet and anode current collector as one side of bilayer. Further, in some examples, the ZBSB apparatus **100** includes both cathode current collector and anode current collector made of titanium.

In some implementations, the ZBSB apparatus **100** includes the first cell **102A** that includes the first cathode electrode **108A.The** ZBSB apparatus **100** is anode less i.e., there is no first anode electrode present inside the ZBSB apparatus **100,** and the first anode current collector itself act as anode electrode for the ZBSB apparatus **100.** The first cathode electrode **108A** is in contact with the first cathode current collector **110A.** Further, the ZBSB apparatus **100** includes the second cell **102B** that includes the second cathode electrode **108B.** Similarly, there is no second anode electrode present in the ZBSB apparatus **100.** The second cathode electrode **108B** is in contact with the second cathode current collector **110B.** The second anode current collector may itself act as the second anode electrode.

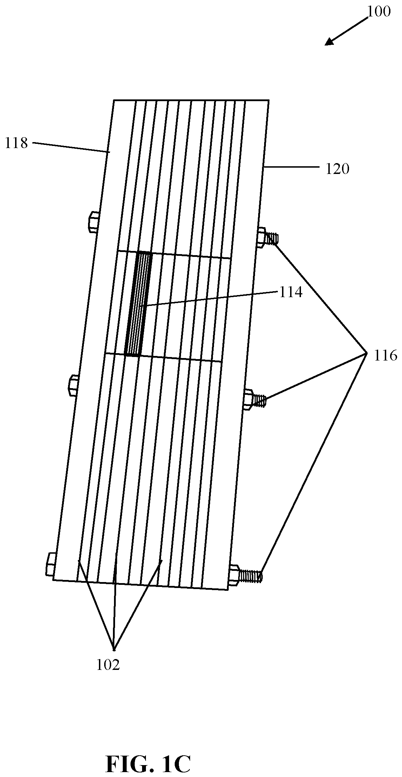

FIG. 1C is a diagram illustrating top view of the ZBSB apparatus, in accordance with an embodiment of the present disclosure. FIG. 1C is explained in conjunction with elements from FIGs. 1A and 1B. With reference to FIG. 1C, there is shown a top view of the ZBSB apparatus **100** depicting the plurality of cells **102,** an electrolyte filling slot **114,** additionally a plurality of fixing means **116** (e.g., screw-bolt based fixing means), a first base plate **118** and a second base plate **120.**

The electrolyte filling slot **114** facilitate the introduction of the electrolyte into the ZBSB apparatus **100.** The electrolyte filling slot **114** allows the easy pouring of gel-based electrolyte into the ZBSB apparatus **100** via this designated slot, avoiding mixing of electrolytes among different cells thus avoiding short circuiting or any other discrepancy which could arise out of mixing of electrolytes of different cells of the ZBSB apparatus **100.** Hence, operational life of the ZBSB apparatus **100** is increased. In an implementation, during the assembly of the ZBSB apparatus **100,** the first base plate **118,** the plurality of cells **102,** and the second base plate **120** are compressed together. In an implementation, the plurality of fixing means **116** are inserted through peripheral portions of each of the first base plate **118** and the second base plate **120.**

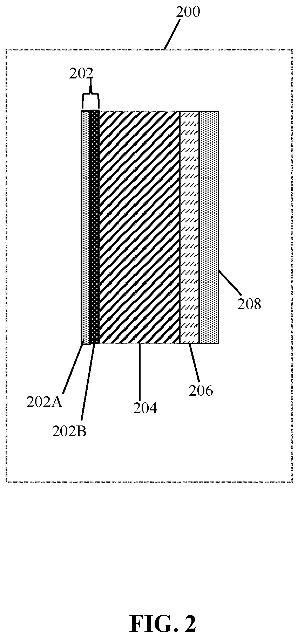

FIG. 2 is a diagram illustrating a cross sectional view of a cell of another ZBSB apparatus, in accordance with another embodiment of the present disclosure. FIG. 2 is explained in conjunction with elements from FIGs. 1A, 1B and 1C. With reference to FIG. 2, there is shown a cell **200** that may be used in the ZBSB apparatus **100.** The cell **200** is substantially similar to each cell of the plurality cells **102** (of FIG. 1), in terms of functionality. The cell **200** includes a bilayer current collector **202** comprising a HDPE layer **202A** and a graphite layer **202B.** The graphite layer **202B** also acts as an anode electrode for the cell **200.** The cell **200** further incudes a cathode electrode **206** and a separator **204** sandwiched between the graphite layer **202B** and the cathode electrode **206.** The cathode electrode **206** is substantially similar to each cathode electrode of the plurality of cells **102** (of FIG. 1). The cathode electrode **206** is in contact with a cathode current collector **208.** The cathode current collector **208** is made of HDPE sheet.

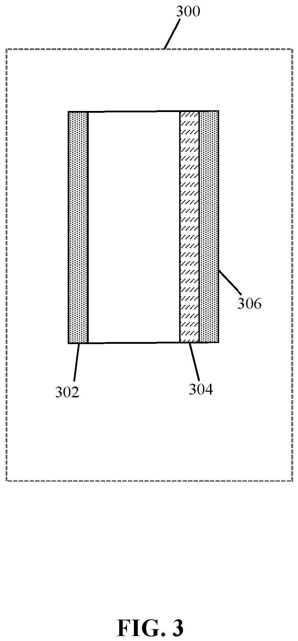

FIG. 3 is a diagram illustrating a cross sectional view of a cell of a yet another ZBSB apparatus, in accordance with another embodiment of the present disclosure. FIG. 3 is explained in conjunction with elements from FIGs. 1A, 1B, and 1C. With reference to FIG. 3, there is shown a cell **300** that may be used in the ZBSB apparatus **100.** The cell **300** is substantially similar to each cell of the plurality of cells **102** (of FIG. 1), in terms of functionality. The cell **300** includes an anode current collector **302.** The anode current collector **302** act as an anode electrode itself. The anode current collector **302** is made of a HDPE sheet. The cell **300** further comprises a cathode electrode **304.** The cathode electrode **304** is substantially similar to each cathode electrode of the plurality of cells **102** (of FIG. 1). The cathode electrode **304** is in contact with a cathode current collector **306.** The cathode current collector **306** is made of HDPE sheet.

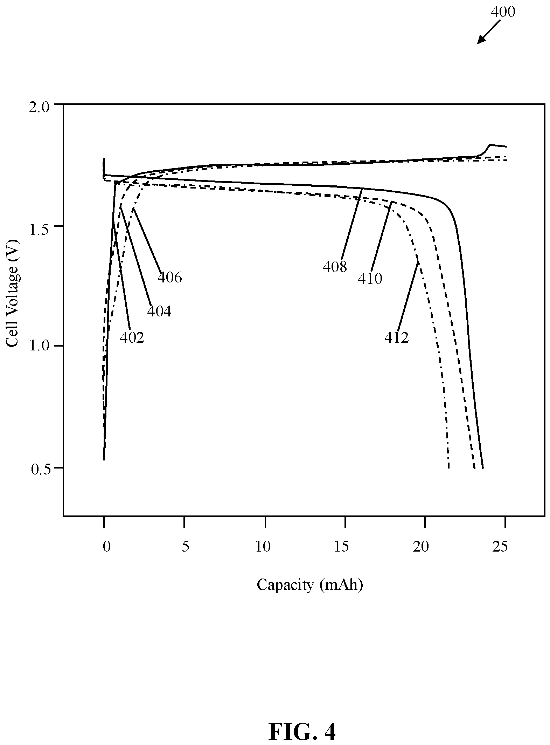

FIG. 4 is a diagram illustrating a graphical representation of GCD profiles of various ZBSB apparatus, in accordance with an embodiment of the present disclosure. FIG. 4 is explained in conjunction with elements from FIGs. 1A, 1B, 1C, 2, and 3. With reference to FIG. 4, there is shown a graphical representation **400** of GCD profiles of the ZBSB apparatus **100** with different cell configurations. Capacity is expressed in milli Ampere hour (mAh) at an abscissa axis of the graphical representation **400.** Cell voltage is expressed in Volt (V) at ordinate. The graphical representation **400** includes a first curve **402** depicting a charging profile of the cell (for example, the second cell **102B)** of the ZBSB apparatus **100,** a second curve **404** depicting a charging profile of the cell **200** and a third curve **406** depicting a charging profile of the cell **300.** The graphical representation **400** further includes a fourth curve **408** depicting a discharging profile of the cell (for example, the second cell **102B)** of the ZBSB apparatus **100,** a fifth curve **410** depicting a discharging profile of the cell **200** and a sixth curve **412** depicting a discharging profile of the cell **300.**

Table 2 (shown below) illustrates the impact of different cell configurations on the parameters of the ZBSB apparatus **100.** The data in Table 2 provides insights into how varying cell setups affect the performance of the ZBSB apparatus **100.**

**Table 2**

| Cell Configuration | Charge Capacity | Discharge Capacity | Coulombic Efficiency (%) | Voltaic Efficiency (%) | Energy Efficiency (%) |
|---|---|---|---|---|---|
| Cell of FIG.1A | 25 | 23.63 | 94.50 | 92.30 | 87.23 |
| Cell of FIG. 2 | 25 | 23.04 | 92.15 | 90.41 | 83.32 |
| Cell of FIG. 3 | 25 | 21.53 | 86.12 | 91.91 | 79.16 |

As enumerated in Table 2, cell configuration of FIG. 1A i.e., the second **cell 102B** of the ZBSB apparatus **100** exhibits maximum energy efficiency as compared to other cell configurations. The maximum energy efficiency suggests that the ZBSB apparatus **100** will store more energy and there will less energy dissipation. Further, the high coulombic efficiency and discharge capacity suggests that the second cell **102B** is highly efficient and in combination with plurality of the cells **102** makes the ZBSB apparatus **100** a good source of power storage.

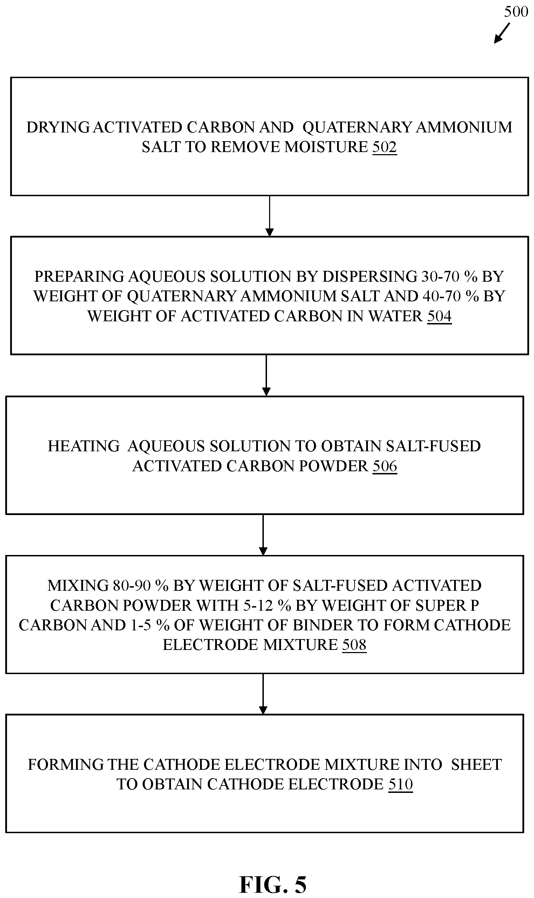

FIG. 5 is a flowchart of a method of preparation of the cathode electrode of the Zinc Bromine Static Battery (ZBSB) apparatus, in accordance with an embodiment of the present disclosure. FIG. 5 is described in conjunction with elements from FIGs. 1A to 4. With reference to FIG. 5, there is shown a method **500** for preparation of the cathode electrode of the ZBSB apparatus **100.** In some implementations, the method **500** may also be implemented to prepare the cathode electrodes **206** and **304.** The method **500** includes steps **502** to **510.**

At step **502,** the method **500** includes drying the activated carbon and the quaternary ammonium salt to remove moisture. In an example, drying may be performed using oven drying or vacuum drying. In some examples, the quaternary ammonium salt may be spread out evenly on trays and placed in an oven set at a specific temperature, typically around 50 degrees Celsius. The heat from the oven facilitates evaporation of the moisture from the materials over a period of time, thus leaving them dry. In some examples, the activated carbon may be dried at 100 degrees Celsius for 24 hours. The purpose of drying the activated carbon and the quaternary ammonium salt is to improve stability, reactivity, and handling characteristics while preventing contamination, ultimately ensuring high-quality and consistent performance for further processing.

At step **504,** the method **500** includes preparing the aqueous solution by dispersing 30-70 % by weight of the quaternary ammonium salt and 40-70 % by weight of the activated carbon in water. The desired quantities of the quaternary ammonium salt and the activated carbon based on the specified weight percentages are being weighed and the measured amounts of the quaternary ammonium salt and the activated carbon are added to a container containing water. The water serves as the solvent for creating the aqueous solution. Further, the quaternary ammonium salt and the activated carbon are mixed. In an example, the preparing of the aqueous solution comprises mixing the aqueous solution for 1-2 hours using magnetic stirring followed by 30 minutes of sonication. The magnetic stirring creates a vortex within the aqueous solution, promoting the mixing of the quaternary ammonium salt and the activated carbon particles. The vortex helps to ensure that all particles are evenly distributed throughout the solution, leading to uniform properties in the final product. Additionally, sonication further enhances mixing by subjecting the solution to high-frequency sound waves, which helps break up any agglomerates and promotes the dispersal of particles. Overall, this combination of mixing techniques improves the quality and consistency of the resulting salt-fused activated carbon component.

At step **506,** the method **500** includes heating the aqueous solution to obtain a salt-fused activated carbon powder. Heating the aqueous solution to obtain a salt-fused activated carbon powder facilitates solvent evaporation, increases concentration, promotes fusion between components, enables powder formation, and enhances stability, ultimately contributing to the efficiency and effectiveness of the manufacturing of the cathode electrode. Further, the heating of the aqueous solution includes heating the aqueous solution at 100 degrees Celsius for 10 hours. The prolonged heating process allows for thorough removal of water from the aqueous solution, leading to the formation of a dry powder with enhanced stability and purity. Additionally, heating at a specific temperature for an extended period ensures consistent and controlled conditions, which are crucial for achieving reproducible results in the synthesis process of the cathode electrode.

At step **508,** the method **500** includes mixing 80-90 % by weight of the salt-fused activated carbon powder with 5-12 % by weight of super P carbon and 1-5 % of weight of the binder to form the cathode electrode mixture. In an example, 90% by weight of salt-fused activated carbon is mixed with 7% of Super P Carbon using the mix blender. Then, 3% of Polytetrafluoroethylene (PTFE) is added as the binder, and the entire mixture is well-mixed using a mix binder. The purpose of this method is to create the cathode electrode that exhibits desirable properties for the Zinc Bromine Static Battery apparatus **100.** The salt-fused activated carbon provides a high surface area and conductivity, while the SPC enhances the electrochemical performance. The binder and the PTFE facilitates in binding the components together and maintaining the structural integrity of the electrode. By mixing the salt-fused activated carbon powder with the SPC and the binder, the resulting cathode electrode mixture exhibits improved conductivity, surface area, and electrochemical performance. This leads to enhanced battery performance and efficiency in the Zinc Bromine Static Battery apparatus **100.** Additionally, the use of the binder ensures the stability and durability of the cathode electrode, allowing it to withstand the operational conditions of the battery system.

At step **510,** the method **500** includes forming the cathode electrode mixture into the sheet to obtain the cathode electrode. Transferring the cathode electrode mixture to a roll sheet-making press machine facilitates the production of a cathode electrode sheet with the desired thickness. This process involves introducing the cathode electrode mixture into the roll sheet-making press machine, where it undergoes compression and rolling to form a uniform and compact sheet. By adjusting the settings of the roll sheet-making press machine, such as pressure and roller gap, the thickness of the resulting cathode electrode sheet can be controlled and optimized for its intended application in the cathode electrode of the Zinc Bromine Static Battery apparatus **100.** This process ensures consistency and uniformity in the manufacturing process, leading to reliable and high-performance cathode electrodes.

The steps **502** to **510** are only illustrative, and other alternatives can also be provided where one or more steps are added, one or more steps are removed, or one or more steps are provided in a different sequence without departing from the scope of the claims herein.

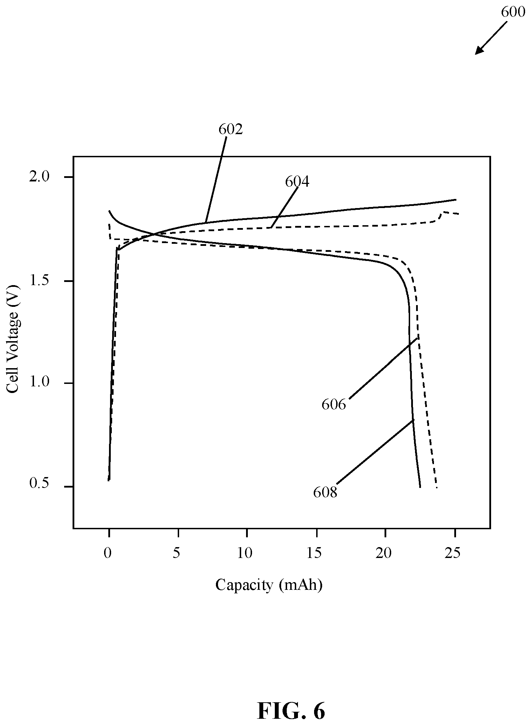

FIG. 6 is a diagram illustrating a graphical representation of a GCD profile depicting the comparison between a wet electrode process and a dry electrode process, in accordance with an embodiment of the present disclosure. With reference to the FIG. 6, there is shown a graphical representation **600** including a first curve **602,** a second curve **604,** a third curve **606,** and fourth curve **608.** The first curve **602** depicts a charging profile of the second cell **102B** having the cathode electrode prepared using a wet electrode process. The second curve **604** depicts a charging profile of the second **cell 102B** with the cathode electrode prepared using a dry electrode process. Further, the third curve **606** depicts a discharging profile of the second **cell 102B** having the cathode electrode prepared using the dry electrode process, and the fourth curve **608** depicts a discharging profile of the second **cell 102B** having the cathode electrode prepared using the wet electrode process.

Table 3 (shown below) illustrates the influence of the cathode electrode manufacturing methods, specifically the dry electrode and wet electrode processes, on the parameters of the ZBSB apparatus **100.** The comparison serves to highlight the significant impact of varying electrode fabrication techniques on the overall performance of the ZBSB apparatus **100.**

**Table 3**

| Process of the cathode electrode | Charge Capacity | Discharge Capacity | Coulombic Efficiency (%) | Voltaic Efficiency (%) | Energy Efficiency (%) |
|---|---|---|---|---|---|
| Wet electrode Process | 25 | 22.49 | 89.95 | 90.87 | 81.74 |
| Dry electrode process | 25 | 23.63 | 94.50 | 92.30 | 87.23 |

As outlined in Table 3, the dry electrode process employed in the preparation of the cathode electrode demonstrates better efficiency compared to the wet electrode process. The cathode electrode fabricated using the dry electrode process exhibits enhanced performance characteristics, indicating the effectiveness of dry electrode process manufacturing approach.

The wet electrode process is a method used in electrode preparation where the electrode components are mixed in the presence of a liquid solvent. In this process, the active materials, conductive additives, binders, and other components are combined in a liquid medium to form a cake or a block. The resulting mixture is then processed and compressed to form electrode sheets or structures. After compression, the solvent is removed through drying, leaving behind a cathode electrode sheet.

The dry electrode process refers to a method of electrode preparation where the electrode materials are combined and processed without the use of a liquid solvent. Instead of using a solvent to create a slurry, the dry electrode process involves mixing the electrode components in a dry state. This typically includes blending together active materials, conductive additives, binders, and other additives directly in their dry form. The resulting mixture is then processed and compressed to form electrode sheets or structures. Dry electrode processes are often used in battery manufacturing to simplify processing steps, reduce solvent usage, and improve electrode performance and stability.

### EXPERIMENTAL PART:

Preparation of the cathode electrode using dry electrode process includes three main steps:

### I. Preparation of the quaternary ammonium salt fused with activated carbon.

The preparation of the quaternary ammonium salt fused with activated carbon involves several steps. First, the activated carbon is dried at 100 degrees Celsius for 24 hours to eliminate moisture. Simultaneously, the quaternary ammonium salt is also dried to remove moisture, maintaining a temperature of 50 degrees Celsius for 24 hours.

Secondly, the aqueous solution is created using pure water as the solvent. Initially, the quaternary ammonium salt is added, ensuring complete dispersion. Following of this the activated carbon is introduced to the mixture of water and the quaternary ammonium salt. The entire combination of the water, the quaternary ammonium salt and the activated carbon is thoroughly dispersed using magnetic stirring for 1 hour, followed by 30 minutes of sonication. The resulting homogenous solution is transferred to a clear glass vessel.

Subsequently, the homogeneous solution is placed in a hot air oven set at 100 degrees Celsius for 10 hours. This process yields the final product - the salt-fused activated carbon component.

### II. Dry electrode process:

Initially, 90% wt. of salt-fused activated carbon component was taken, followed by 7% of the SPC. This mixture was thoroughly blended using a mix blender. Subsequently, 3% of the PTFE was added as a binder, and the entire mixture was well-mixed using a mix binder. The final product obtained is the cathode electrode mixture.

### III. Preparation of the cathode electrode sheet:

The cathode electrode mixture was transferred to a roll sheet-making press machine to obtain the cathode electrode sheet of the proper thickness.

Table 4 enumerates the different combination of the quaternary ammonium salts with the activated carbon used to obtain the cathode electrode using the dry electrode process.

**Table 4**

| The Quaternary ammonium salt (QAS) | Activated carbon (A.C) + QAS = 100 % | Super P Carbon | PTFE |
|---|---|---|---|
| TEAB | 60 % + 40 % (5.2g A.C+ 3.5 g QAS) | 7% | 3% |
| TPAB | 56 % +44 % (5.2g A.C+ 4.0 g QAS) | 7% | 3% |
| TBAB | 53% + 47 % (5.2g A.C+ 4.5 g QAS) | 7% | 3% |
| TEAC | 65% + 35% (5.2g A.C+ 2.8 g QAS) | 7% | 3% |
| TEAC | 61% + 39% (5.2g A.C+ 3.3g QAS) | 7% | 3% |
| TEAC | 57% + 43% (5.2g A.C+ 3.8 g QAS) | 7% | 3% |

### ADDITIONAL EXAMPLES

The following examples further demonstrate the critical nature of the claimed component ranges and their effect on the performance of the ZBSB apparatus 100, with particular focus on boundary testing to establish range criticality.

### Example 1: Effect of salt-fused activated carbon component content

A series of cathode electrodes was prepared according to the method **500** described in the specification, varying the salt-fused activated carbon component content while maintaining Super P carbon at 7% by weight and PTFE binder at 3% by weight. Tetraethylammonium bromide (TEAB) was used as the quaternary ammonium salt. The electrodes were tested in the ZBSB apparatus configuration shown in FIG. 1B.

**Table 5: Performance metrics for varying salt-fused activated carbon content**

| Salt-fused AC content (% by weight) | Discharge Capacity (mAh) | Energy Efficiency (%) | Performance Rating | Bromine Trapping Effectiveness |
|---|---|---|---|---|
| 75 | 19.38 | 70.12 | Poor | Inadequate |
| 78 | 21.05 | 76.92 | Marginal | Insufficient |
| 80 | 22.84 | 82.78 | Good | Effective |
| 82 | 23.01 | 83.94 | Good | Effective |
| 85 | 23.12 | 84.95 | Very Good | Highly Effective |
| 88 | 23.42 | 86.32 | Excellent | Highly Effective |
| 90 | 23.63 | 87.23 | Excellent | Optimal |
| 92 | 23.08 | 84.69 | Marginal | Reduced Effectiveness |
| 95 | 21.73 | 79.54 | Poor | Insufficient |

As shown in Table 5, the energy efficiency and overall performance peak within the claimed range (80-90% by weight), with maximum performance at 90% salt-fused activated carbon content. Notably, a sharp decline in performance is observed at the boundaries: 78% (just below the lower limit) shows "Marginal" performance compared to "Good" performance at 80% (lower limit), while 92% (just above the upper limit) shows "Marginal" performance compared to "Excellent" at 90% (upper limit). This clear step-change at the boundaries demonstrates the criticality of the claimed range.

### Example 2: Effect of Super P carbon content

A series of cathode electrodes was prepared according to the method **500,** varying the Super P carbon content while maintaining salt-fused activated carbon component at 90% by weight and PTFE binder at 3% by weight. The electrodes were tested in the ZBSB apparatus configuration shown in FIG. 1B.

**Table 6: Performance metrics for varying Super P carbon content**

| Super P carbon (% by weight) | Discharge Capacity (mAh) | Energy Efficiency (%) | Performance Rating | Conductivity Effectiveness |
|---|---|---|---|---|
| 3 | 20.15 | 73.82 | Poor | Insufficient |
| 4 | 21.38 | 78.24 | Marginal | Suboptimal |
| 5 | 22.94 | 83.15 | Good | Adequate |
| 7 | 23.63 | 87.23 | Excellent | Optimal |
| 9 | 23.58 | 87.08 | Excellent | Optimal |
| 10 | 23.41 | 86.48 | Very Good | Highly Effective |
| 12 | 22.87 | 83.72 | Good | Adequate |
| 14 | 21.52 | 78.93 | Marginal | Excessive Carbon |
| 17 | 20.38 | 74.63 | Poor | Detrimental |

As shown in Table 6, the energy efficiency and performance rating peak within the claimed range (5-12% by weight), with optimal performance between 7-10% Super P carbon content.

The boundary testing clearly shows a significant performance drop when moving from 5% (lower limit, "Good" performance) to 4% (just below lower limit, "Marginal" performance) and from 12% (upper limit, "Good" performance) to 14% (just above upper limit, "Marginal" performance). This demonstrates the critical nature of the claimed range boundaries.

### Example 3: Effect of binder content

A series of cathode electrodes was prepared according to the method **500,** varying the binder content while maintaining salt-fused activated carbon component at 90% by weight and Super P carbon at 7% by weight. PTFE was used as the binder. The electrodes were tested in the ZBSB apparatus configuration shown in FIG. 1B.

**Table 7: Performance metrics for varying binder content**

| Binder content (% by weight) | Discharge Capacity (mAh) | Energy Efficiency (%) | Performance Rating | Mechanical Stability | Electrode Integrity After Cycling |
|---|---|---|---|---|---|
| 0.5 | 18.76 | 68.73 | Poor | Very Poor | Significant degradation |
| 1.0 | 22.15 | 81.26 | Good | Fair | Minor cracking |
| 2.0 | 23.25 | 85.65 | Very Good | Good | Stable |
| 3.0 | 23.63 | 87.23 | Excellent | Excellent | Fully intact |
| 4.0 | 23.28 | 85.86 | Very Good | Excellent | Fully intact |
| 5.0 | 22.94 | 84.51 | Good | Excellent | Fully intact |
| 7.0 | 21.08 | 77.38 | Poor | Good | Intact but compromised activity |

As shown in Table 7, the energy efficiency peaks within the claimed range (1-5% by weight), with optimal performance at 3% binder content. While mechanical stability remains good at 7% binder content (above the claimed range), the overall performance rating is "Poor" due to significantly reduced energy efficiency. This demonstrates that simply having good mechanical properties is insufficient; the optimal balance between mechanical stability and electrochemical performance is achieved only within the claimed range. The boundary testing shows a substantial drop in performance when moving from 1% (lower limit, "Good" performance) to 0.5% (just below lower limit, "Poor" performance) and from 5% (upper limit, "Good" performance) to 7% (above upper limit, "Poor" performance).

### Example 4: Optimization within the claimed ranges

To demonstrate the optimization potential within the claimed ranges, a series of electrodes was prepared with varying compositions all within the claimed ranges.

**Table 8: Performance metrics for compositions within claimed ranges**

| Salt-fused AC (%) | Super P carbon (%) | Binder (%) | Energy Efficiency (%) | Performance Rating |
|---|---|---|---|---|
| 80 | 5 | 1 | 80.34 | Good |
| 80 | 5 | 5 | 81.57 | Good |
| 80 | 12 | 1 | 80.92 | Good |
| 80 | 12 | 5 | 82.43 | Good |
| 85 | 7 | 3 | 84.95 | Very Good |
| 90 | 5 | 1 | 83.62 | Good |
| 90 | 5 | 5 | 84.35 | Very Good |
| 90 | 12 | 1 | 82.98 | Good |
| 90 | 12 | 5 | 83.76 | Good |
| 90 | 7 | 3 | 87.23 | Excellent |

As shown in Table 8, all compositions within the claimed ranges showed good to excellent performance (energy efficiency > 80%), with the optimum at 90% salt-fused activated carbon, 7% Super P carbon, and 3% binder.

### Example 5: Bromine diffusion measurements at range boundaries

To directly demonstrate the mechanism behind the performance improvements, bromine diffusion measurements were conducted specifically at and around the range boundaries.

**Table 9: Bromine diffusion at salt-fused activated carbon range boundaries**

| Salt-fused AC content (% by weight) | Bromine concentration in electrolyte (µmol/mL) | Energy Efficiency (%) | Bromine Trapping Effectiveness |
|---|---|---|---|
| 78 | 6.83 | 76.92 | Insufficient |
| 80 | 4.21 | 82.78 | Effective |
| 90 | 2.94 | 87.23 | Optimal |
| 92 | 5.12 | 84.69 | Reduced Effectiveness |

**Table 10: Bromine diffusion at Super P carbon range boundaries**

| Super P carbon (% by weight) | Bromine concentration in electrolyte (µmol/mL) | Energy Efficiency (%) | Overall Performance |
|---|---|---|---|
| 4 | 7.36 | 78.24 | Marginal |
| 5 | 4.48 | 83.15 | Good |
| 12 | 4.52 | 83.72 | Good |
| 14 | 7.25 | 78.93 | Marginal |

**Table 11: Bromine diffusion at binder range boundaries**

| Binder content (% by weight) | Bromine concentration in electrolyte (µmol/mL) | Energy Efficiency (%) | Overall Performance |
|---|---|---|---|
| 0.5 | 8.64 | 68.73 | Poor |
| 1.0 | 5.23 | 81.26 | Good |
| 5.0 | 4.38 | 84.51 | Good |
| 7.0 | 6.92 | 77.38 | Poor |

The results shown in Tables 9, 10 and 11 directly confirm the critical role of the claimed ranges in minimizing bromine diffusion. The bromine concentration in the electrolyte increases significantly at points just outside the claimed ranges, demonstrating that the technical effect of bromine trapping is optimized within the claimed composition ranges.

### Example 6: Long-term cycling stability at range boundaries

To evaluate the long-term impact of the composition ranges, cycling stability tests were conducted at and around the range boundaries. Electrodes were subjected to 100 charge-discharge cycles, and capacity retention was measured.

**Table 12: Capacity retention after 100 cycles**

| Composition | Capacity retention (%) | Cycling Stability Rating |
|---|---|---|
| 78% salt-fused AC, 7% SPC, 3% binder | 68.3 | Poor |
| 80% salt-fused AC, 7% SPC, 3% binder | 87.5 | Good |
| 90% salt-fused AC, 7% SPC, 3% binder | 89.2 | Excellent |
| 92% salt-fused AC, 7% SPC, 3% binder | 72.1 | Poor |
| 90% salt-fused AC, 4% SPC, 3% binder | 70.5 | Poor |
| 90% salt-fused AC, 5% SPC, 3% binder | 86.8 | Good |
| 90% salt-fused AC, 12% SPC, 3% binder | 85.6 | Good |
| 90% salt-fused AC, 14% SPC, 3% binder | 69.3 | Poor |
| 90% salt-fused AC, 7% SPC, 0.5% binder | 42.7 | Very Poor |
| 90% salt-fused AC, 7% SPC, 1% binder | 81.4 | Good |
| 90% salt-fused AC, 7% SPC, 5% binder | 83.9 | Good |
| 90% salt-fused AC, 7% SPC, 7% binder | 66.2 | Poor |

The results shown in Table 12 demonstrate that the long-term stability of the cathode electrode is significantly enhanced within the claimed ranges. Compositions just outside the claimed ranges show substantially lower capacity retention and poor cycling stability ratings, further confirming the critical nature of the claimed ranges for long-term battery performance.

The experimental results conclusively demonstrate that the claimed compositional ranges (80-90% salt-fused activated carbon, 5-12% Super P carbon, and 1-5% binder) are critical for achieving optimal performance in the ZBSB cathode electrode. The boundary testing shows clear step-changes in performance when moving just outside the claimed ranges, confirming that these ranges represent an unexpected technical optimization that would not have been obvious to a person skilled in the art.

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural. The word "exemplary" is used herein to mean "serving as an example, instance or illustration". Any embodiment described as "exemplary" is not necessarily to be construed as preferred or advantageous over other embodiments or to exclude the incorporation of features from other embodiments. The word "optionally" is used herein to mean "is provided in some embodiments and not provided in other embodiments". It is appreciated that certain features of the present disclosure, which are, for clarity, described in the context of separate embodiments, may also be provided in combination in a single embodiment. Conversely, various features of the invention, which are, for brevity, described in the context of a single embodiment, may also be provided separately or in any suitable combination or as suitable in any other described embodiment of the disclosure.

## Claims

1. A cathode electrode of a Zinc Bromine Static Battery (ZBSB) apparatus (100), comprising:
80-90 % by weight of a mixture of a quaternary ammonium salt fused with activated carbon to form a salt-fused activated carbon component;
5-12 % by weight of super P carbon; and
1-5 % by weight of a binder,
wherein the salt-fused activated carbon component, super P carbon, and the binder are mixed together to form the cathode electrode.

2. The cathode electrode of claim 1, wherein the cathode electrode comprises 85-90 % by weight of the salt-fused activated carbon component, 7-12 % by weight of the super P carbon, and 3 % by weight of the binder.

3. The cathode electrode of claim 1 or 2, wherein the salt-fused activated carbon component comprises 30-70 % by weight of the quaternary ammonium salt and 40-70 % of weight of the activated carbon.

4. The cathode electrode of any preceding claim, wherein the quaternary ammonium salt comprises tetraethylammonium bromide, tetrapropylammonium bromide, tetrabutylammonium bromide, tetraethylammonium chloride, tetrapropylammonium chloride, and tetrabutylammonium chloride.

5. The cathode electrode of any preceding claim, wherein the binder comprises polytetrafluoroethylene (PTFE) or polyvinylidene fluoride (PVDF).

6. A Zinc Bromine Static Battery (ZBSB) apparatus (100), comprising:
a first cell (102A) that comprises a first cathode electrode (108A),
wherein the first cathode electrode (108A) is in contact with a first cathode current collector (110A); and
a second cell (102B) that comprises a second cathode electrode (108B),
wherein the second cathode electrode (108B) is in contact with a second cathode current collector (110B);
wherein each of the first cathode electrode (108A) and the second cathode electrode (108B) comprises:
80-90 % by weight of a mixture of a quaternary ammonium salt fused with activated carbon to form a salt-fused activated carbon component;
5-12 % by weight of super P carbon; and
1-5 % by weight of a binder,
wherein the salt-fused activated carbon component, super P carbon, and the binder are mixed together to form the cathode electrode.

7. The ZBSB apparatus (100) of claim 6, wherein each of the first cathode electrode (108A) and the second cathode electrode (108B) is in physical contact with a current collector comprising any one of titanium metal, a conductive high-density polyethylene (HDPE) sheet, and a bilayer of graphite conducting polymer and HDPE conducting sheet.

8. A method (500) of preparing a cathode electrode of a Zinc Bromine Static Battery apparatus (100), comprising:
drying activated carbon and a quaternary ammonium salt to remove moisture;
preparing an aqueous solution by dispersing 30-70 % by weight of the quaternary ammonium salt and 40-70 % by weight of the activated carbon in water;
heating the aqueous solution to obtain a salt-fused activated carbon powder;
mixing 80-90 % by weight of the salt-fused activated carbon powder with 5-12 % by weight of super P carbon and 1-5 % of weight of a binder to form a cathode electrode mixture; and
forming the cathode electrode mixture into a sheet to obtain the cathode electrode.

9. The method (500) of claim 8, wherein the preparing of the aqueous solution comprises mixing the aqueous solution for 1-2 hours using magnetic stirring followed by 30 minutes of sonication.

10. The method (500) of claim 8 or 9, wherein the heating of the aqueous solution comprises heating the aqueous solution at 100 degrees Celsius for 10 hours.
